Europäisches Patentamt

(19) European Patent Office

Office européen des brevets

(11) Publication number: **0 433 205 A2**

# EUROPEAN PATENT APPLICATION

(21) Application number: **90480162.8**

(22) Date of filing: **17.10.90**

(51) Int. Cl.⁵: **G06F 3/033, G06K 11/18**

(30) Priority: **15.12.89 US 451280**

(43) Date of publication of application:
**19.06.91 Bulletin 91/25**

(84) Designated Contracting States:
**DE ES FR GB IT**

(71) Applicant: **International Business Machines Corporation**
**Old Orchard Road**
**Armonk, N.Y. 10504 (US)**

(72) Inventor: **Abell, William Albertus, Jr.**
**9219 Harrodsburg Road**
**Lexington, Kentucky 40390 (US)**
Inventor: **Shuman, David William**
**4016 Daisy Hill Lane**
**Lexington, Kentucky 40514 (US)**
Inventor: **Vough, Gary David**
**3260 Tudor Drive**
**Lexington, Kentucky 40503 (US)**
Inventor: **Williams, James Monroe**
**480 Seeley Drive**
**Lexington, Kentucky 40502 (US)**

(74) Representative: **Bonin, Jean-Jacques**
**Compagnie IBM France Département de Propriété Intellectuelle**
**F-06610 La Gaude (FR)**

(54) **A pointing device control for a computer keyboard.**

(57) A keybutton (14) control integrated into the keyboard (10) of a computer (20) is disclosed, which controls the pointer on the display. The keybutton controls direction of the movement of the pointer in response to the lateral movement of the keybutton and the speed of the movement in response to the force with which the keybutton is forced in the direction of movement and downward by the operator's thumb.

FIG. 1

EP 0 433 205 A2

# A POINTING DEVICE CONTROL FOR A COMPUTER KEYBOARD

A pointing device control relates to keyboards and more specifically to keyboards that are attached to and control computers and indirectly the movement and control of a pointer, arrow or other location indicia displayed on the face of a video display tube.

## BACKGROUND OF THE INVENTION

A device which is known as a mouse has become the predominate device in the market for controlling the movement of a pointer or indicia on the screen of a display or video display tube. The pointer may take the form of an arrow or a pulsating illuminated spot or any other visual pattern which locates a point on the screen of the display, which then is interpreted as pointing to or identifying the desired function or operation of the computer as represented by some symbol on the screen, such as an icon, menu item or control function displayed as a word.

The mouse is moved across the surface of a desk or other planar surface and a device on the underside of the mouse such as a roller ball rotates, sending signals representing the movement to the computer. Alternative approaches include sensing coils mounted in the mouse which generates the signals as the coil moves over a fine wire mesh in a pad or plate. Similarly, the mouse may utilize photo diodes and detectors in conjunction with a black and white grid.

The disadvantage of these types of mouse attachments is that they require desk space that approximates a 25 cm × 36 cm area to be clear or to receive the pad or grid, as well as the connecting cord which connects the mouse and/or the pad to the computer. The movement of the mouse over the table surface is sensed by the rotation of balls or cylinders on the bottom of the mouse and the detection of the amount of rotation of the balls or cylinders and translates that rotation into counts that indicate the distance in a coordinate direction that the pointer is to be moved. The speed that the pointer is moved is dependent upon the speed at which the mouse is moved, and at which the mouse generates the commands or counts to control the movement of the pointer on the computer display screen.

A joystick is a similar input device that generates a signal which indicates X and Y directional components and the counts sent to the computer depend on the timed intervals during which sampling occurs. The speed of the pointer may vary depending on the length of time that the joystick is held deflected and the programming of the joystick microprocessor.

An additional drawback to a mouse is that the hand of the operator must be removed from the keyboard to operate the mouse. Alternative approaches which overcome the later objection are keys that reside in the key matrix of the keyboard which have been altered to provide directional control signals. An example of one such device is that described in United States Patent 4,860,577 issued to David H. Strayer et al. The Strayer et al device is a keybutton located on the home row of the keyboard and capable of detecting deflection of the keybutton shaft in a bending mode, by the attachment of strain gauges to the shaft or to the base of the key structure to detect the bending or lateral deflection of the key. In the Strayer et al device, simple depression of the key results only in the output of signals that are interpreted as the character for which the key is the input. The Strayer et al device is a cursor control by deflection of a key, which controls the movement of the cursor left/right or up/down. Having a dual function key, of necessity, requires that there be a way to condition the key to either input characters or to be used as a directional control key.

A cursor control differs from a pointer control by a mouse or the like, in that the cursor movement is limited to orthogonal movement, while the movement of the pointer may be in any direction on the display.

It is desirable to be able to control the speed of the indicia as it moves across the display. This allows the operator to move the pointer indicia faster for long moves and to control the indicia at a slower speed for shorter moves.

## SUMMARY OF THE INVENTION

The pointer control device is designed to utilize the force of the thumb of the operator for proper operation. The electronic signals that emanate from the key unit are analog signals that represent the distances from the edges of the direction sensor pads to the point at which a force is exerted onto the pad. The analog signals are determined in both an X and a Y direction, which then represent the X and Y components of a vector from the center of the device to the point of force engagement. The vector defines the direction of the movement of the display indicia.

The directional sensing pads have positioned below them, a compressible layer of material which will tend to spread the area of force engagement onto a still further underlying detector layer. This detecting layer is a force sensing resistor layer. As the force is exerted onto the layered sandwich of the pads and the force sensing resistor, the force sensing resistor loses the resistance characteristic in proportion to the force on the device. A resulting varied current flow through the device increases with the increase in force and is used to control the speed of movement of the indicia. The current will vary with any variance in the force.

When the operator pushes the key in a direction approximating the desired direction of movement, the directional sensing pads output signals that represent the direction the key is moved or more precisely the direction from the sensing pad center, of the point of engagement of the key with the top pad and the top pad presses the underlying pad and the resulting signals are used by the microprocessor to derive direction control signals to move the pointer in the direction indicated. With the impinging of the force on the sensing pads, a force is exerted onto the force sensing resistor to permit current to flow and thus output a signal, the magnitude of which is used to control the frequency at which signals are generated by the microprocessor to effectively control the speed with which the indicia is moved across the screen.

DRAWINGS

Fig. 1 is a representation of a typical computer system that would have a keyboard which is provided with the invention.

Fig. 2 is a bottom view of the control key for the invention showing the engagement surface and mounting structure of the key.

Fig. 3 is an exploded view showing the elements of the sensing portion of the key assembly separated.

Fig. 4 shows a diagrammatic representation of the relation of the key to the microprocessor and the display.

Fig. 5 is a logic flow diagram of the operations performed in the microprocessor as they relate to the key and the computer system.

Figs. 6, 7 and 8 are flow diagrams which expand the illustration of steps represented in Fig. 5.

DETAILED DESCRIPTION OF THE INVENTION

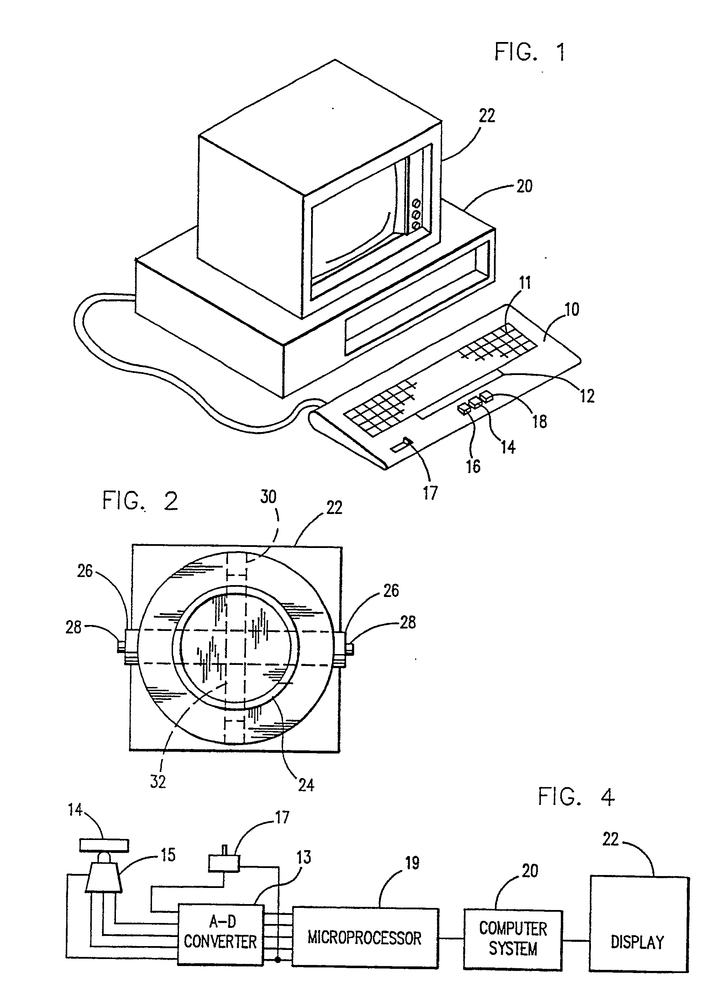

Most personal computers available today have the ability to use a mouse if it is attached to the computer. The mouse is an auxiliary input device to the computer for moving the cursor about the screen of the display 22 such as shown in Fig. 1. The mouse also has typically two additional control buttons or keys that may be depressed to cause commands to be input to the computer system 20 which cause the execution of functions identified on the display and which the cursor is identifying. The keyboard 10 of the computer system in Fig. 1, is much like the keyboard of a typewriter and is designed for touch keying such that the operator's hands remain on the keyboard as much as possible. The pointer control key 14 is integrated into the keyboard housing 10 at a position adjacent the spacebar 12, toward the operator and generally centered with regard to the character keys 11. The alignment of the key 14 is such that the thumb on one of the operator's hands may be easily placed on the dished upper surface of the key 14 and move the key 14 without removing the fingers from the home row of character keys 11 on the keyboard 10. On either side of the control key 14, there are two keys 16 and 18 which are fully analogous to the mouse buttons on a mouse discussed above, and form no part of this invention.

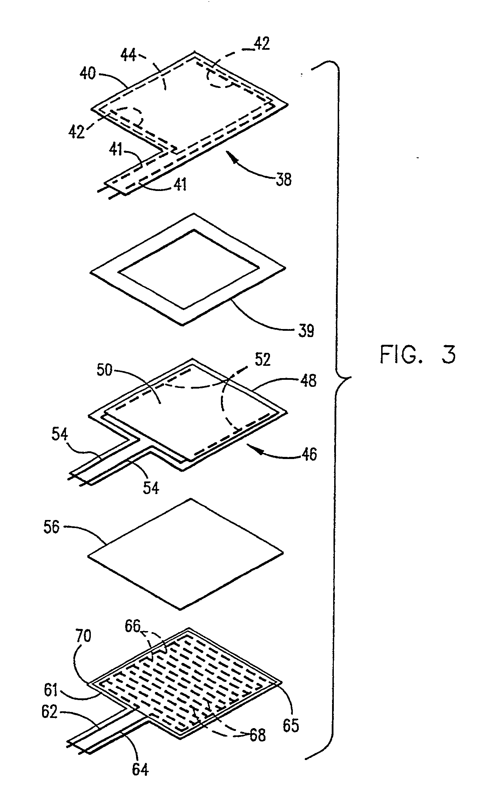

Referring now to Fig. 2. The pointer control key is provided with a head 22 engageable by the operator's thumb and moveable in an infinite number of directions. To make the key head 22 so moveable, it is supported by a gimbal mounting technique. Shaft 26 extends through the key head 22 structure and is pivotally mounted by a pin 32 forced into hole 30 and through 26. Accordingly, shaft 26 may oscillate about pin 32 to a limited extent. To provide a mounting for shaft 26 to a support, in an oscillatory manner, shaft 26 is provided with opposing pivot shafts 28 that are insertable into journals (not shown) contained in the keyboard 10. This gimbal support scheme permits the control key 22 to be pivoted or rocked in numerous directions and to thereby force the engagement ring 24 downward in the keyboard 10 to engage the sensing assembly shown in Fig. 3.

The ring 24 will be tilted with respect to the plane of the sensing pad 38 in Fig. 3 when it engages the top surface of the pad 38. Pad 38 is a film sheet 40 with conductive paths 42 formed on the film sheet 40. The theoretical engagement of the ring with the pad 38 is a point but in reality the engagement will be a small area.

The sensing pad 38 illustrated in Fig. 3 has conductive paths 41 formed thereon such that the terminating legs 42 of the conductive paths 41 are parallel and located near opposite edges of the pad 38. Between the two terminating legs 42 of conductors 41 is a continuous film or layer 44 of carbon filled ink which acts as a flexible film resistor. The resistor film 44 presents a voltage gradient which is used to detect the distance from the terminating legs 42, that the engagement point is located. Sensing pad 38 has a voltage gradient thereacross and the voltage sensed at any point thereon represents a distance from the terminating legs 42.

Sensing pad 46 likewise has a film layer 48, a layer of carbon ink film 50, conductors 54 with terminating legs 52. The pad 46 is oriented such that the legs 52 are perpendicular to the legs 42 on pad 38. The two pads each provide an output representative of distance from the high voltage leg 42 or 52 and thus a location in the X and Y directions. This pair of values may be used to define X and Y vectors from the center of the pads, as will be discussed later. The two pads 38 and 46 are separated by a spacer layer 39.

The force sensing resistor pad 70 comprises a film layer 61 with a pattern of two conductors 62, 64 formed onto the film 61. The conductors 62, 64 branch into interdigitated fingers 66 and 68 such that the adjacent fingers 66, 68 may be electrically connected by the force sensing pressure variable resistive layer 65 overlaying the grid, when the force exerted on the layer 65 causes a reduction of resistance, by the forcing together of conductive particles in the material, as is well known in the art of force sensing resistors, thereby increasing the conductivity through the materials. Such a device as pad 70 may be acquired from Interlink Electronics, Carpinteria, California. As the force increases, the resistance is lowered and a voltage impressed on one of the conductors 62, 64 is increasingly conducted to the other conductor 64, 62.

With sensing pads 38 and 46 positioned in facing relationship with a spacer therebetween, the resistive film layers 44, 50 of each pad 38, 46 may be deflected to contact each other. The assemblage thus formed is placed on top of a thin resilient pad 56 shown in Fig. 3 and the force sensing resistor pad 60, the sandwich thus formed is positioned below and in position to be operated by the key 14 of Fig. 1.

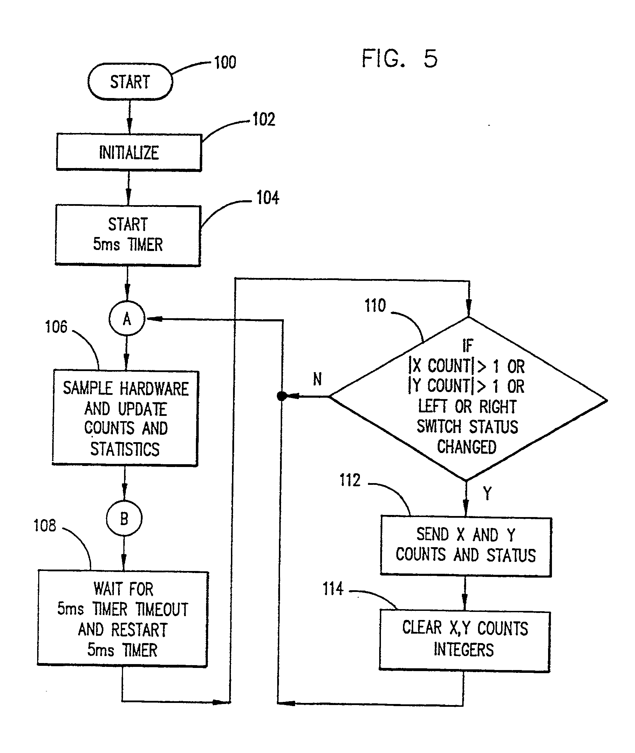

Referring to Fig. 4, the pointer control 15 is electrically connected to a microprocessor 19 that controls the electrical sampling of the control and the outputting of signals to the computer system 20 for providing the signals used to control the display 22.

Referring to Fig. 5, the logic flow diagram represents the operations of the microprocessor 19 during its operation. At operation 100, the computer 20 has been turned on and power is supplied to the pointer control microprocessor 19. In operation 102, the pointer microprocessor 19 will initialize the storage registers and other variables in the memory of the microprocessor 19 to default conditions prescribed. Typically, the values for Xmin, Xmax, Ymin, Ymax, Xctr and Yctr are set to 85, 115, 85, 115, 100 and 100, respectively. These values assume that the center of the circle of engagement by ring 24 is located at a point represented by 100 division units out of a possible 256, from a 5 volt potential applied across conductors 42 and 52 on conductor on each of the sensor pads 38, 46, respectively. Each of the pads has voltage outputs which may be detected and converted to 256 separate values, which may be determined from an analog to digital converter 13 such as a National Semiconductor ADC 0844, obtainable from National semiconductor Corporation. The ADC 0844 converter 13 is operative between the pointer control 15 and the microprocessor 19. The values for Z, representative of the force exerted on the sensor pads are derived from a table lookup using the detected voltage as the entry to the table, as will be described below.

After initialization in operation 102, a timer in the microprocessor 19 is set to time 5 milliseconds and started, in operation 104. This may be a dedicated 5 ms timer if the microprocessor is so designed. For purposes of this disclosure, it will be assumed that the timer is a dedicated 5 ms timer as this is the current best and preferred embodiment.

The sensor 15 is sampled to determine if the control key 14 has been actuated by the operator and if operated by the operator, counters resident in the microprocessor 19, storing the locations of the point of engagement are updated and the historic statistics are also updated at operation 106. The historic statistical values are used to insure that spurious samples are diluted in their effect. A more detailed discussion of this will follow.

The flow is then to operation 108 where the timer is allowed to time out and is reset for the next 5 ms period, before progressing to operation 110.

In operation 110, the absolute value of the X count is checked to determine if it is greater than 1. The X value is the location of the point of engagement as determined in operation 106 in the X direction from the center point repetitively added with earlier X distance values for the same incident of engagement. X value modified by the sensitivity factor and the force (Z) factor becomes the X count as described below. Since X count may be fractional, it may require several cycles through the routine to result in a count having an absolute value greater than 1. The absolute value of the Y count is checked in an identical manner. The mouse buttons 16 and 18 are checked to determine if there has been a status change since the previous check in any previous cycle. If none of the queries are satisfied, the flow branches to point A to further sample and collect values. When the condition required in operation 110 is satisfied, then the flow is to operation 112.

When a condition of operation 110 is satisfied, the X and Y counts, along with the + or - signs for the counts, are sent to the mouse port of the computer, along with the status of the left and right switch buttons. For computers without a dedicated mouse port, the connection may be made through the serial interface, with which virtually every computer is equipped. Both the mouse port and the serial interface port may be described as a mouse input port.

After the X and Y counts have been sent to the mouse input port in operation 112, the counts that were sent (integers) are subtracted or cleared from the registers in which they reside with any fractional values remaining in the registers, and the flow loops, back to point A.

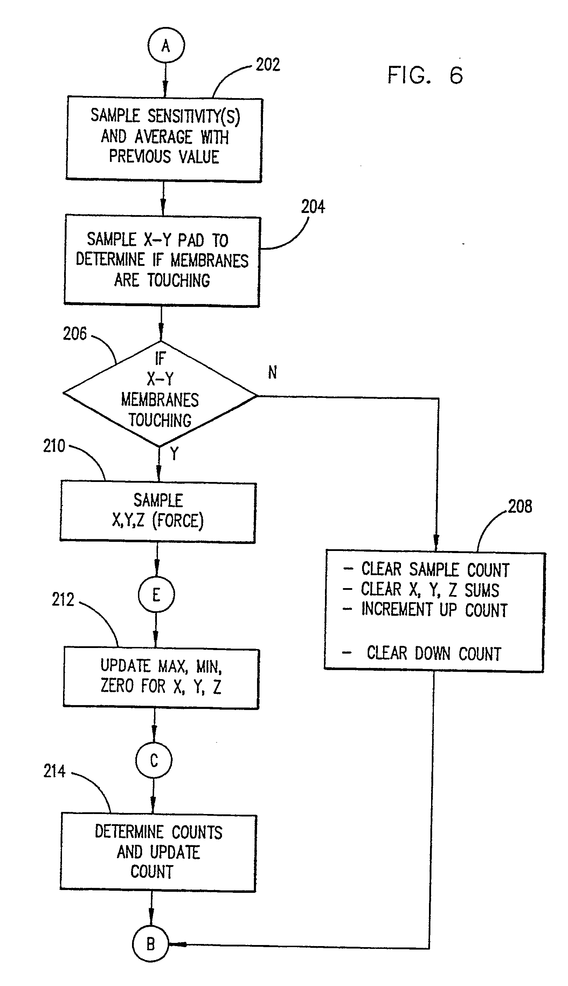

In order to expand on the description of selected segments of Fig. 5, reference is now made to Fig. 6 which illustrates in more detail the operation of sampling of the X and Y sense pads and the manipulation of the data received from the sense pads 38 and 46. The first operation in the sensing of the hardware, operation 202, is to sample the sensitivity control 17 shown in Fig. 1 on the keyboard 10. The sensitivity control 17, a slide potentiometer, allows the operator to select how sensitive the controls will be so that if the operator desires a slower reaction time, the control may be set for a low sensitivity so that the operation of this device will result in a slower speed than if the control 17 is set for a high sensitivity. The sensitivity sample is averaged with the previous sensitivity value, which is an average of previous sensitivity samples, in order to smooth out any spurious samples, and not allow a single incorrect sample to adversely affect the operation of the device.

Following the sampling step in operation 202, the sampling of the X and Y sense pads 38, 46 occurs in operation 204.

The output signals of the sampling of the X and Y pads 38, 46 are used to determine if the two pads are touching in operation 206. If the two pads 38, 46 are not touching, the flow is to operation 208, where the X, Y and Z (force sense pad 70 output) sums, sample and down counts are cleared and the up count is incremented. The up and down counts represent a period of time that the sense pads 38, 46 have been disengaged from or engaged with each other, respectively and are used to debounce the closure signal or break signal indicating the making and breaking of the contact between sense pads 38, 46.

The X and Y values are determined when a force is applied to the sandwich by the engagement ring 24 of key 22 in Fig. 2, the carbon ink films are forced into face to face contact at the point of engagement. On a periodic basis, electrical signals are impressed on the sensor pads to determine if the pads are pushed together. This is accomplished by impressing a low voltage, i.e. 5 volts on one conductor 41, 54 of one pad 38, 46 and detecting the presence of a voltage on the conductors 54, 41 of the other pad 46, 38. If such voltage is present, when the pads are pushed into face to face engagement at one point in operation 204, operation continues to determine what the location of engagement is and the force related output of the device in operation 210, so that the pointer may be commanded to move in the desired direction at an associated speed. The X and Y sensor pads 38, 46 are sampled sequentially by impressing onto one of the leads 41 of pad 38, the X pad, a 5 volt potential and grounding the other of the leads 41, while connecting both of leads 54 of pad 46 as a sensing contact in a voltage sensor. The voltage at the engagement point is transferred to the other pad 46. This second pad 46 acts as a voltage probe and the voltage transferred to the pad surface is readable on the leads 54 of the pad 46.

The detection of the Y voltage is detected in an analogous manner using a 5 volt potential on one of the leads 54 and reading the output voltage on the leads 41 of pad 38. Between the two sampling cycles, the X and Y distance to the engagement point can be determined in terms of a voltage which, when processed with an analog to digital converter 13, results in a digital value which represents the distance from the 5 volt lead that the engagement point exists on both the X and the Y sense pads 38, 46. A suitable analog to digital converter is the National Semiconductor ADC 0844.

One can see that if the X distance from the center is small, it will take a longer time or greater number of sampling cycles to accumulate the X count sufficient to meet the required condition. Conversely, a large X distance will accumulate the necessary value quickly and the command to move the indicia will be processed sooner. The same is true for the Y distances and Y counts.

As described earlier, the Z component is determined as a current which varies depending on the force exerted on the sense pad 70.

Since the microprocessor 19, at start up, does not have any data as to the minimum or the maximum counts or distance from the center of the possible circle of engagement that the point of engagement may occupy, as the pointer control is used by the operator, the maximum and minimum values in the X and Y directions are collected and stored as the sampling occurs. Eventually this establishes a stable minimum and maximum, from which a stable center value may be derived in operation 212, by averaging the present X and Y maximum and minimums.

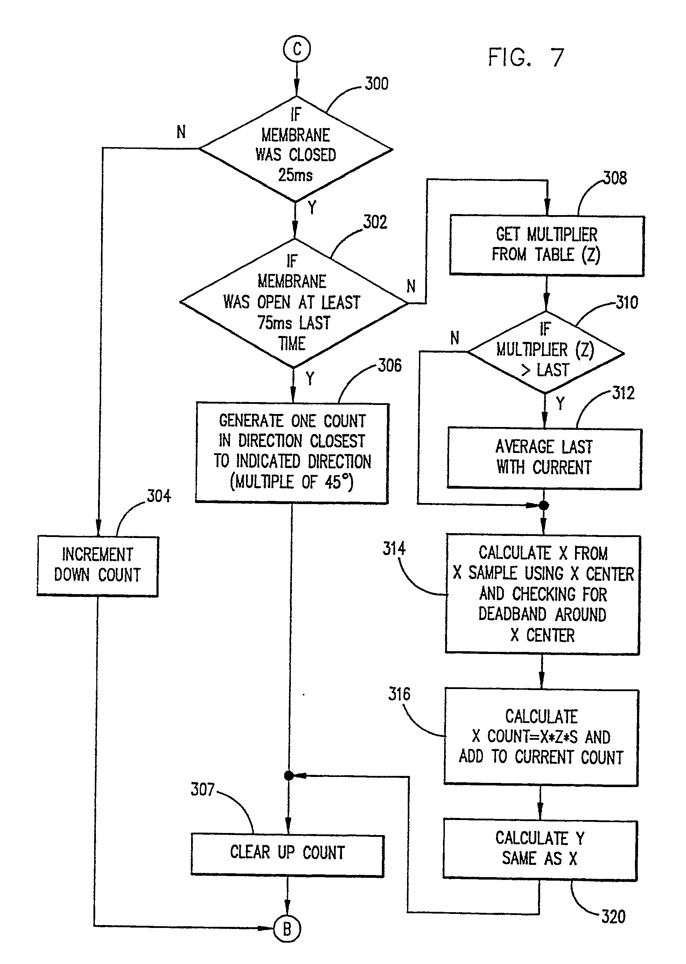

In operation 214, the counts of the point of engagement are determined in the X and Y direction. Then the counts are updated. A more detailed explanation of this operation will follow with respect to Fig 7.

The logic flow is then directed to B which effectively flows directly to operation 108 in Fig. 5.

The determination of the counts is illustrated in Fig. 7 where the flow from operation 212 enters at C and is directed to operation 300. The sense pads 38 and 46 have been checked to see if the pads have been pushed together and if the previous sensing cycles have determined that the pads were not pushed together for at least 25 ms the down count has been incremented on each cycle in operation 304. Since each sampling cycle occurs every 5 ms the accumulation of the down count will indicate that the switch has not been activated for the period of time necessary to indicate closure, until the down count is sufficient to indicate the closure condition has existed for at least 25 ms and then the flow is directed to operation 302.

In operation 302, the up count is checked to see if the last time the sensor pads 38 and 46 were detected as open, the pads had been open for at least 75 ms by the up count being greater than 15. If the condition in operation 302 is satisfied, then the control flow is to operation 306. The combination of operations 300 and 302 act as a debounce routine to insure that the two pads 38, 46 are intentionally in contact with each other for sufficient time to be a valid condition.

In operation 306, if the pads 38 and 46 are sensed as engaged with each other, it is desirable to provide some immediate feedback to the operator so a single count is generated in the direction closest to the direction indicated by the point of engagement on the pads 38 and 46.

Thereafter, the up count is cleared in operation 307 and the flow then is directed to B.

A factor is needed to influence the speed (or number of counts per unit time) of the indicia control signals. The voltage signal output as measured across a fixed value resistor in series with the pad 70 in Fig. 3 is converted to a digitized value by an analog to digital converter to provide a digital value that is the multiplier. The multiplier is used to introduce a speed factor into the X and Y counts outputted by the microprocessor 19 for the X and Y values.

Referring to Operation 302, if the pads 38, 46 were not open at least 75 ms (the up count was less than or equal to 15) the last time, then a multiplier is fetched from the lookup table in operation 308. If operation 310 determines the multiplier is less than or equal to the multiplier last retrieved, then the control branches from operation 310 to operation 314. If on the other hand, the multiplier is greater than the previous multiplier, it is averaged with the last multiplier in operation 312, which is either an average value of the multipliers accumulated over several cycles or the multiplier from the lookup table of analog to digital converter 13 if operation 310 results in a negative determination, on the previous cycle, in operation 312, thereby preventing an extremely fast movement. When the condition required in operation 310 is not met, operation 312 is bypassed. This permits the controlled acceleration of the indicia but a very rapid stopping.

In operation 314, X is calculated from the X value of the sample by subtracting therefrom the value for X center and then determining if the value derived has a value, the absolute value of which is less than or equal to 13. This step is done to allow the accurate following of the X axis of the screen. Thus, small deviations from the X axis will be ignored, and the pointer moved along the X axis. Using the value obtained in operation 314, the X count that is to be ultimately sent to the computer is determined by multiplying the X calculated in operation 314 by the value from operation 308, when operation 310 was negative or operation 312, when operation 310 was affirmative, and the sensitivity factor determined in operation 202, and the result of this multiplication is added to the current count in the X counter.

Thereafter, in operation 320, the Y count is calculated in the same manner as the X count was calculated in operations 308 through 316. Following the determination of the Y count, the flow is to operation 307 where the up count is cleared as previously described and then to B.

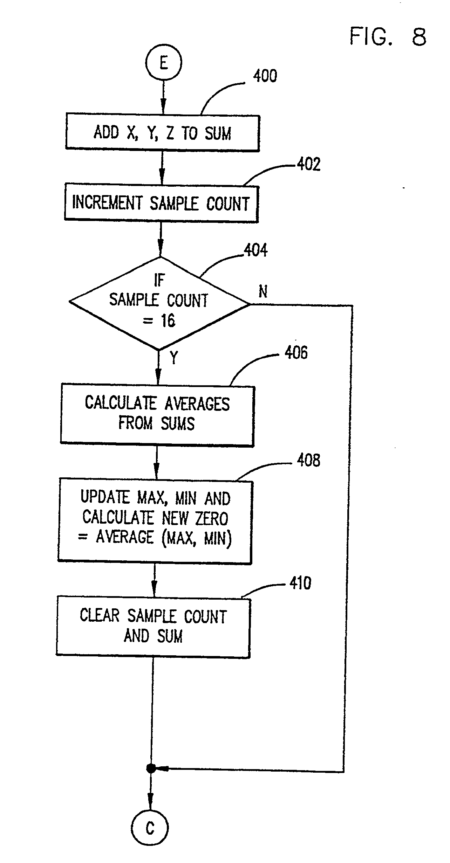

Referring back to operation 212 in Fig. 6, the steps represented by this operation are shown in more detail in Fig. 8. The entry point E of this flow diagram in Fig. 8 is the logic flow from operation 210. In operation 400, the X value, Y value and Z value which represent the location of the point of engagement of the X and Y sense pads 38, 46 and the digitized value representing the current flow through force sensing resistor pad 70 are added to the respective values to update those values by microprocessor 19. A count indicating the number of samples taken in the current sequence is incremented by one in operation 402.

The sample count or number of sequential samples taken is tested in operation 404, to determine if the count is equal to 16, and if not, the flow is directly to exit point C which is the input of operation 214. On the other hand, if the sample count equals 16, then the flow is to operation 406 where the X, Y and Z sums are divided by 16 to determine the average of the X, Y and Z values. This averaging serves to smooth the values and not let a single spurious reading of one of the values grossly effect the process.

Using the average values of X and Y, as determined in operation 406, the the Xmax, Ymax, Xmin and Ymin values are updated if any of the values determined in operation 406 exceed the then existing respective minimum and maximum values. With the updated minimum and maximum values, the X center and Y center values are then determined anew.

In operation 410, the sample count and sum is cleared or reset to zero to begin a new sampling sequence, with the logic flow then being to point C which is the input to operation 214.

As one can readily see, the pointer control will repeatedly sample the inputs from the input assembly 13 and will accumulate them. The rate of accumulation of the counts derived from the inputs is affected by the Z factor which represents the force exerted on the force sensing resistor pad 70, and the sensitivity setting. If the force is great, the Z value multiplied with each of the X and Y input values, will be large and will result in the more rapid accumulation of X counts and Y counts and the more frequent transmission of the counts to the computer 20. The more frequent the transmission of the counts, the faster the pointer will move from the starting point to the destination. Thus, the more counts sent in a set period of time, the farther the pointer will be moved in that same period of time and the pointer indicia will have been moved faster.

The best mode of implementing this invention and preferred embodiment is a software program which may be written by a programmer of ordinary skill in the art, following the flow diagrams of Figs. 5 through 8.

The microprocessor is preferably an Intel 80C51 microprocessor manufactured by Intel Corp., Santa Clara, California, but may be any commercially available microprocessor when programmed according to the requirements of that particular microprocessor selected, as defined by its manufacturer.

## Claims

1. A computer display pointing device control for controlling the position and movement of an indicia on a computer display comprising :

    a single key mounted on and incorporated into a data entry keyboard and moveable by an operator in a plurality of directions having at least a lateral component ;

    said key further moveable in a direction having a component generally perpendicular to the lateral movement of said key, to exert a force ;

    means, engageable by said key, for detecting the direction of said lateral movement ;

    means, responsive to engagement of said means for detecting by said key, for detecting and quantifying said force transmitted by said key onto said means for detecting ;

    means, responsive to said means for detecting and said means for detecting and quantifying, for generating signals representing the direction of said movement of said key and said force exerted on said means for detecting by said key ; and

    means responsive to said signals for generating commands to control the direction and speed of movement of said indicia on said display.

2. The computer display pointing device control for controlling the position and movement of an indicia on a computer display of Claim 1 wherein the key engages said means for detecting only at points defining a circle.

3. The computer display pointing device control for controlling the position and movement of an indicia on a computer display of Claim 2 wherein said means for generating electrical signals comprises means for detecting said point of engagement and means for comparing said point of engagement with a point defining a center point of said circle, thereby defining the direction of desired movement.

4. The device of claim 3 wherein said means for comparing comprises means for determining components in two directions.

5. The computer display pointing device control for controlling the position and movement of an indicia on a computer display of Claim 1 wherein said means for detecting and quantifying comprises a force sensing resistor.

6. The computer display pointing device control for controlling the position and movement of an indicia on a computer display of Claim 5 wherein said force sensing resistor is separated from said key by said means for detecting direction.

7. The computer display pointing device control for controlling the position and movement of an indicia on a computer display of Claim 2 wherein said means for detecting comprises a means for dividing a voltage to represent the distance from an edge of said means that said engagement occurs.

8. The computer display pointing device control for controlling the position and movement of an indicia on a computer display of Claim 6 wherein said force sensing resistor is separated from said means for detecting direction by a compliant spacer means for spacing one from the other and smoothing the transmission of said force onto said force sensing resistor.

9. The computer display pointing device control for controlling the position and movement of an indicia on a computer display of Claim 3 further comprising electronic interpretation means for interpreting results of said comparison for determining said direction from said center of said circle of said point of engagement.

10. The computer display pointing device control for controlling the position and movement of an indicia on a computer display of Claim 9 wherein said direction is defined by voltages of magnitudes representing vectors which define said position of engagement on said circle.

11. The computer display pointing device control for controlling the position and movement of an indicia on a computer display of Claim 2 wherein said key comprises a dished, concave shape for accepting an operators thumb.

12. The computer display pointing device control for controlling the position and movement of an indicia on a computer display of Claim 11 wherein said keyboard comprises at least a plurality of character keys and a space bar.

13. The computer display pointing device control for controlling the position and movement of an indicia on a computer display of Claim 12 wherein said key is positioned toward an operator position from said spacebar and centered with respect to said character keys for engagement by an operator's thumb.

14. The computer display pointing device control for controlling the position and movement of an indicia on a computer display of Claim 12 further comprising a row of said character keys comprising a home row, and said key is located adjacent said space bar and accessible by an operators thumb when said operators fingers engage said home row.

15. The computer display pointing device control for controlling the position and movement of an indicia on a computer display of Claim 1, 5 or 9 further comprising operator controllable means for controlling a sensitivity signal which, when combined with said signals representing force, controls the speed with which said pointer is moved.

FIG. 1

FIG. 2

30

22

26

26

28

28

32

24

FIG. 4

14

17

22

15

13

19

20

A-D
CONVERTER

MICROPROCESSOR

COMPUTER
SYSTEM

DISPLAY

22

20

11

10

12

18

14

16

17

FIG. 3

FIG. 5

START — 100

INITIALIZE — 102

START 5ms TIMER — 104

(A)

106 — SAMPLE HARDWARE AND UPDATE COUNTS AND STATISTICS

(B)

108 — WAIT FOR 5ms TIMER TIMEOUT AND RESTART 5ms TIMER

110 — IF |X COUNT| > 1 OR |Y COUNT| > 1 OR LEFT OR RIGHT SWITCH STATUS CHANGED

N

Y

112 — SEND X AND Y COUNTS AND STATUS

114 — CLEAR X,Y COUNTS INTEGERS

FIG. 6

A

SAMPLE SENSITIVITY(S)
AND AVERAGE WITH
PREVIOUS VALUE
— 202

SAMPLE X–Y PAD TO
DETERMINE IF MEMBRANES
ARE TOUCHING
— 204

206 —
IF
X–Y
MEMBRANES
TOUCHING

N

Y

210 —
SAMPLE
X,Y,Z (FORCE)

208 —
- CLEAR SAMPLE COUNT
- CLEAR X, Y, Z SUMS
- INCREMENT UP COUNT

- CLEAR DOWN COUNT

E

212 —
UPDATE MAX, MIN,
ZERO FOR X, Y, Z

C

214 —
DETERMINE COUNTS
AND UPDATE
COUNT

B

FIG. 7

(C)

300
IF MEMBRANE WAS CLOSED 25ms

N →

Y

302
IF MEMBRANE WAS OPEN AT LEAST 75ms LAST TIME

N →

Y

308
GET MULTIPLIER FROM TABLE (Z)

310
IF MULTIPLIER (Z) > LAST

N

Y

312
AVERAGE LAST WITH CURRENT

306
GENERATE ONE COUNT IN DIRECTION CLOSEST TO INDICATED DIRECTION (MULTIPLE OF 45°)

304
INCREMENT DOWN COUNT

314
CALCULATE X FROM X SAMPLE USING X CENTER AND CHECKING FOR DEADBAND AROUND X CENTER

316
CALCULATE X COUNT=X*Z*S AND ADD TO CURRENT COUNT

307
CLEAR UP COUNT

320
CALCULATE Y SAME AS X

(B)

FIG. 8

E

ADD X, Y, Z TO SUM — 400

INCREMENT SAMPLE COUNT — 402

IF
SAMPLE COUNT
= 16 — 404

N

Y

CALCULATE AVERAGES
FROM SUMS — 406

UPDATE MAX, MIN AND
CALCULATE NEW ZERO
= AVERAGE (MAX, MIN) — 408

CLEAR SAMPLE COUNT
AND SUM — 410

C